(19) Europäisches Patentamt
European Patent Office
Office européen des brevets

(11) EP 3 378 890 A1

(12) EUROPEAN PATENT APPLICATION

(43) Date of publication:
**26.09.2018 Bulletin 2018/39**

(21) Application number: **17162445.5**

(22) Date of filing: **22.03.2017**

(51) Int Cl.:
***C08K 5/00*** *(2006.01)* ***C08K 5/13*** *(2006.01)*
***C08K 5/3492*** *(2006.01)* ***C08K 5/1545*** *(2006.01)*
***C08K 5/32*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Songwon Industrial Co., Ltd.**
**Ulsan 680-090 (KR)**

(72) Inventor: **Keck, Klaus**
**4031 Angleur (BE)**

(74) Representative: **Michalski Hüttermann & Partner Patentanwälte mbB**
**Speditionstraße 21**
**40221 Düsseldorf (DE)**

(54) **POLYOLEFIN STABILIZERS WITH REDUCED FRAGMENTATION**

(57) The invention relates to a polyolefin composition having a selected thermal and processing stabilizer so that less pollutants emerge from the polyolefin.

EP 3 378 890 A1

## Description

The present invention relates to a polyolefin composition containing stabilizers and articles made using such polyolefine compositions, such as pipes, packaging, especially food-packaging articles or the like.

Recent progress in the manufacturing and processing of polymers has led to the application of plastics in virtually every aspect of modern day life. However, polymeric compounds are prone to aging under the effects of oxidants, light and heat. This results in a loss of lifetime such as loss of strength, stiffness and flexibility, discoloration and scratching as well as loss of gloss.

It is well-known in the art that stabilizers such as antioxidants can prevent or at least reduce these effects. However, since these stabilizers usually have a far lower molecular weight than the polyolefin, a further important issue as regards the presence of antioxidants in polyolefin compositions is the aim to reduce migration of antioxidants or products received therefrom into media e.g. into water in a pipe made of such a polyolefin composition or into food from a packaging article made of such a polyolefin composition.

This is particularly important in case of a pipe transporting drinking water. Due to the permanent contact to the inner pipe surface, compounds can migrate from the pipe material into the water. The admissible amounts of compounds within the drinking water are fixed by legal requirements and even stricter requirements are to be expected in Europe or other countries. This not only goes for the stabilizers as such but to some extent even more for products which arise out of the fragmentation of such stabilizers.

Similar requirements are present in the field of food packaging or food appliances.

It is therefore an object to provide polymer compositions which on the one hand show sufficient stability and on the other hand lead to less release of undesired compounds.

This object is solved by a polymer composition according to Claim 1 of the present invention. Accordingly a polyolefin composition is provided, comprising a polyolefin, a radical scavenger and a processing stabilizer, whereby the radical scavenger comprises a compound selected from the group comprising a first compound having a first structure (I)

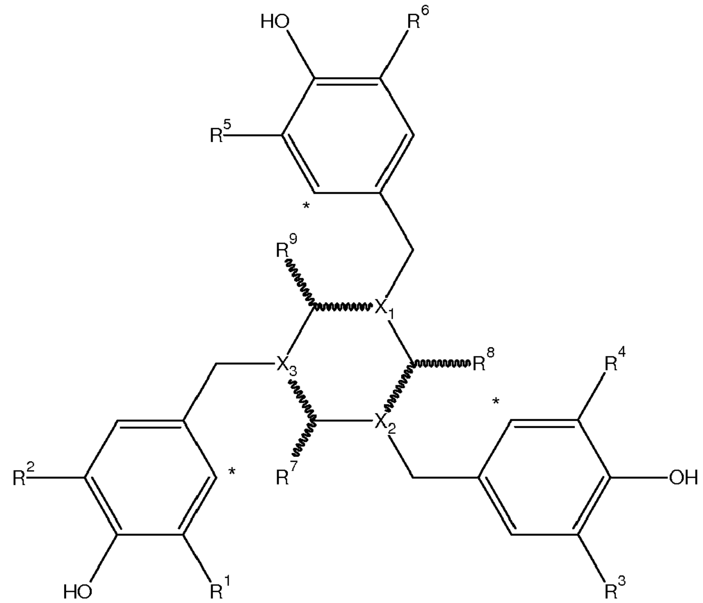

(I)

whereby $R^1$ to $R^6$ are independently from each other alkyl, preferably methy, ethyl, isopropyl, butyl and t-butyl,

$R^7$ to $R^9$ are independently from each other either alkyl, preferably methyl, or =O, whereby any of the $R^7$ to $R^9$ may be connected to the nearest carbon atom marked with "*" to form a six-membered ring,

$X^1$ to $X^3$ are independently from each other either C or N

and the center ring of the molecule is aromatic;
a second compound selected from a second structure A-B-A whereby A has the following structure:

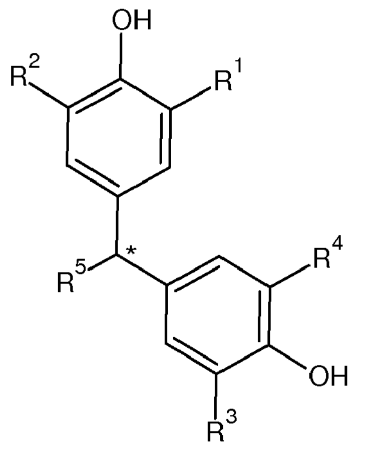

with $R^1$ to $R^5$ being independently selected from either hydrogen or alkyl, preferably methyl, ethyl, propyl, n-butyl, t-butyl, provided that one of $R^1$ and $R^2$ as well as one of $R^3$ and $R^4$ is not hydrogen and whereby A and B are connected via the carbon marked as "*" and B selected from the group comprising an alkyl bridge having two to six carbon atoms or -$[CH_2]_n$-C=X-O-$[CH_2]_m$-O-C=X-$[CH_2]_n$- with n being an integer from to 0 to 4, X either being O, S or two hydogen atoms and m being an integer from 2 to 6.
or mixtures thereof
and the processing stabilizer essentially does not contain a hydrolizable phosphite compound having a 2-4-substituted phenol moiety.

Surprisingly it has been found that by using such a polyolefine composition the detectable pollutants, especially arising from a fragmentation of the stabilizers, are significantly reduced for most applications, while still providing a suitable stability of the polyolefine.

The present invention furthermore relates to a use of a stabilizer compositon, comprising a radical scavenger comprising a compound selected from the compound (I) and (II) or mixtures thereof and a processing stabilizer which essentially does not contain 2-4-substituted phenol moiety for reducing the amount of pollutants.

The term "polyolefine" according to the present invention especially means and/or includes all substrates as defined in US 2015/0090671 A1, US 2014/0296398 A1, WO 2006/119935 A1 and/or US 2005/0148700 A1.

The individual stabilizers and components for these stabilizers will be discussed in more detail, whereby any features can be combined ad libitum:

Radical scavenger:

The term "radical scavenger" according to the present invention especially means and/or includes a compound which protects the polyolefin in the solid state from auto-oxidation.

Radical scavangers can potentially as well interact and function during the melt-conversion of polyolefins.

According to the invention, the radical scavenger comprises a compound selected from the compound (I) and (II) or mixtures thereof. According to a preferred embodiment of the present inventio, the radical scavenger consists essentially of a compound selected from the compound (I) and (II) or mixtures thereof.

The term "consisting essentially of" in the sense of the present invention especially means and/or includes (in wt/wt) $\geq$ 95%, more preferred $\geq$ 98% and most preferred $\geq$ 99%.

Compound (I)

According to a preferred embodiment of the present invention, $R^1$ to $R^6$ are independently from each other methyl and t-butyl.

However, according to a preferred embodiment of the invention, all $R^1$ to $R^6$ are t-butyl.

According to an alternative preferred embodiment of the invention, on one ring on R is methyl and the other is t-butyl.

According to a preferred embodiment of the present invention, all $X^1$ to $X^3$ are C and all $R^7$ to $R^9$ are alkyl.

According to an alternative preferred embodiment of the present invention, all $X^1$ to $X^3$ are N and all $R^7$ to $R^9$ are =O.

According to a preferred embodiment of the present invention, the Compound (I) is selected from the group comprising:

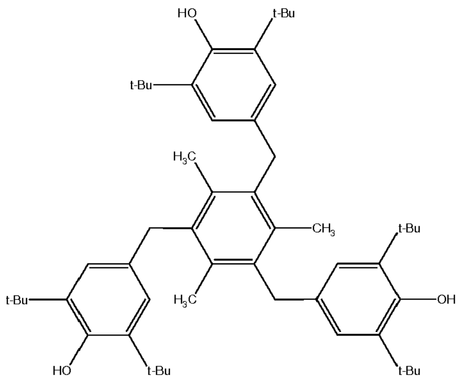
,
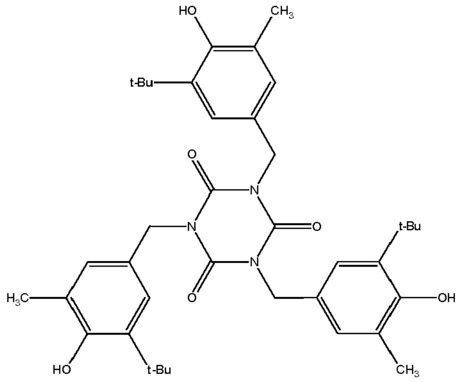
,

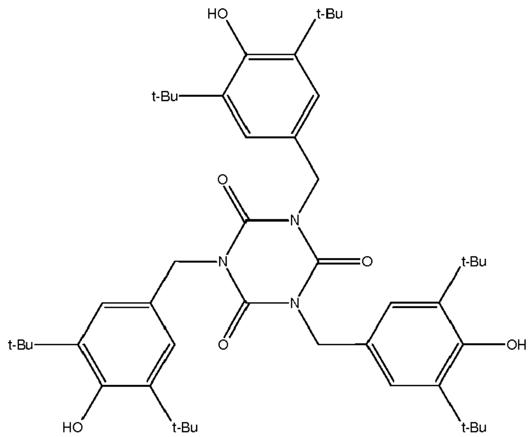

or mixtures thereof.

Compound (II)

According to a preferred embodiment, one $R^1$ and $R^2$ is hydrogen, the other is t-butyl. According to a preferred embodiment, one $R^3$ and $R^4$ is hydrogen, the other is t-butyl.

According to a preferred embodiment, $R^5$ is not hydrogen, preferably $R^5$ is methy.

Preferably the moiety "B" is $-[CH_2]_a-C=O-O-[CH_2]_b-O-C=O-[CH_2]_a-$ with a= 0 or 1 and b 2 or 4.

According to a preferred embodiment of the present invention, Compound (II) includes, preferably consist essentially of the following compound:

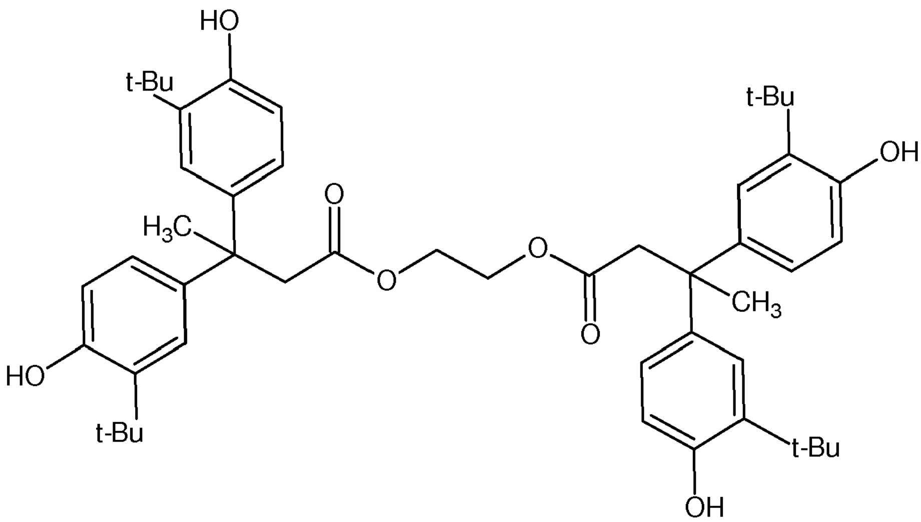

Processing stabilizer:

The term "processing stabilizer" according to the present invention especially means and/or includes a compound which-protects the polyolefin in the molten state from auto-oxidation. Processing stabilisers can, depending on the application and/or preferred embodiment and/or their chemical nature either act alone or as synergist to selected "radical scavengers".

According to a preferred embodiment of the present invention, the processing stabilizer comprises, preferably consists essentially of a compound selected out of the group comprising phosphites, phosphonites, N-hydroxylamines, natural antioxidants, especially selected from the group comprising curcumin, quercetin, naringenin, beta-carotin, resveratrol, Vitamin E and derivatives of all these compounds, cyclic pentaerythritole diphosphite esters, partially unsaturated hydrocarbons or mixtures thereof.

According to a preferred embodiment, the polyolefine further comprises an acid scavenger. Consequently the present invention also relates to the use of a stabilizer composition as described above together with an acid scavenger.

The term "acid scavenger" according to the present invention especially means and/or includes a compound which neutralizes acidity which may originate from the polymerisation catalyst of the polyolefin synthesis; usually this will be mainly Ziegler/Nata catalysts. It is understood, that not every catalyst used for polyolefin synthesis requires an acid scavenger.

According to a preferred embodiment of the present invention, the acid scavenger comprises, preferably consists essentially of a metal oxide, metal hydroxide, metal organic salt and/or metal carbonate. Especially preferred are hydrotalcite, hydrocalumite, metal fatty acids, zink oxide and calcium carbonate.

The present invention furthermore relates to a product comprising an inventive polyolefine and/or a product making use of the inventive use.

According to a preferred embodiment, the product comprises a product selected from the group comprising

- Pipes
- Rigid food packaging
- Flexible food packaging
- Food appliances

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

Additional details, characteristics and advantages of the object of the invention are disclosed in the subclaims and the following description of the respective figures --which in an exemplary fashion--show one preferred embodiment according to the invention. Such embodiment does not necessarily represent the full scope of the invention, however, and reference is made therefore to the claims and herein for interpreting the scope of the invention. It is to be understood that both the foregoing general description and the following detailed description are exemplary and explanatory only and are intended to provide further explanation of the present invention as claimed.

Description of the extraction tests:

Polyolefin:

The experimental tests which are described furtheron were conducted with a LLPDE grade polyolefin. It is a Ziegler/Natta catalyzed polyethylene manufactured after UNIVATION fluidized bed gas phase polymerization. Its melt flow index $MFI_{2.16/190}$ is 0.9 [g/10 min] and its density 0.918 [g/cm$^3$]. Its physical form is fine powder.

Sample preparation:

The compounding of the LLDPE took place using a Toshiba TEM 37BS twin screw extruder with a temperature profile from 190°C to 215°C under nitrogen. In order to match or at least simulate the processing conditions of industrial equipment, this extrusion was repeated five times.

Migration Test:

The migration tests were performed using the following standard procedure.

10 g of the sample (polyethylene granules) are immersed in 100 ml of water. The mixture is stirred at room

temperature for 72 hours. Subsequently, the polyethylene granules are decanted off and the aqueous extract is subjected to GC-MS analysis.

Melt Flow Index ($MFI_{Weight/Temperature}$)

The melt flow index is a very crude (but simple and practical) rheological measurement of the flow behavior of polymer melts at a given temperature and for one single, given shear rate. It is proportional to the molecular weight of the polymer. An increase in melt flow index corresponds to a decrease in molecular weight due to chain scission, while a decrease in melt flow index corresponds to an increase in molecular weight due to crosslinking reactions.

MFI measurement were carried in accordance with ISO1133 on a semi-automatic Ceasit 16412.

Yellowness Index (YI)

The yellowness index is a measure of the discoloration of a (plastic) material with specific emphasis on the yellowing (in contrast to whiteness index and total color change). It is calculated according to the following equation

$$YI\,E313 = \frac{100\,(C_X X - C_Z Z)}{Y}$$

$$YI\,D1925 = \frac{100\,(1.274976795X - 1.058398178\,Z)}{Y}$$

YI measurement were carried out in accordance with ISO E 313 on a Greytag Macbeth Spectro Eye. For productivity reasons, YI is measured on polyethylene granules rather than on moulded plaques; although the latter yield more precise results.

Seven comparative samples (C.1 to C.6) and two inventive samples (1.1 and I.2) were investigated. The composition is as follows:

| Sample | Composition |
|---|---|
| C.1 | No antioxidant |
| C.2 | 1000 ppm of 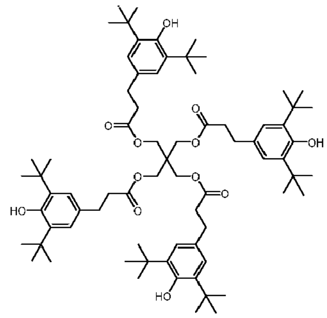 |
| C.3 | 1000 ppm of 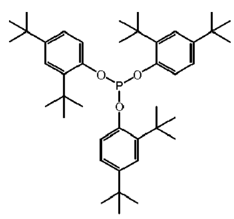 |
| C.4 | 500 ppm of C.2 + 500 ppm of C.3 |
| C.5 | Added Stabilizer (1000 ppm) |

(continued)

| Sample | Composition |
|---|---|
| | 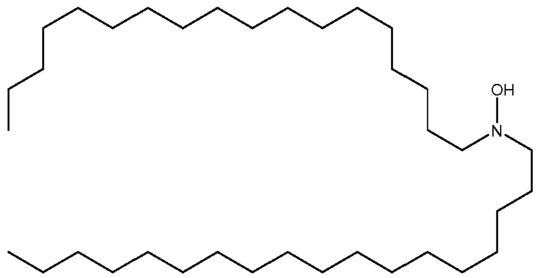 |
| C.6. | Added Stabilizer (1000pm): Vitamin E |
| 1.1 | Added Stabilizer: 500 ppm |
| | 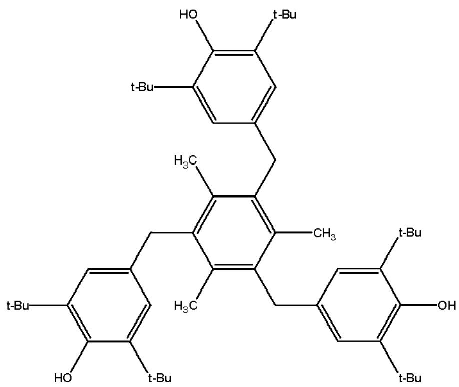 additionnaly 500 ppm 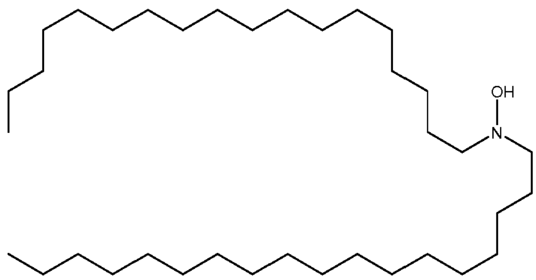 |
| 1.2. | Added Stabilizer: 500 ppm 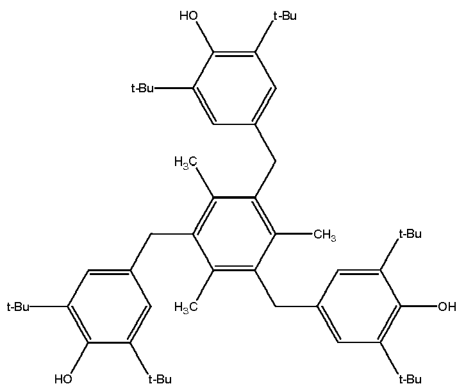 And 500 ppm Vitamin E |

All samples furthermore included 750 ppm of calcium stearate.

The results are given in the table below:

| Sample | Extrusion Pass | MFI | YI | Durability | No. of Fragments | Concentration of quantifiable fragments [ppb] |
|---|---|---|---|---|---|---|
| C.1 | 0 | 0.70 | | | | |
| | 5 | 0.32 | 0.5 | No | high | |
| C.2 | 0 | 0.78 | | | 6 | 375 |
| | 5 | 0.53 | 7.5 | Yes | 7 | 503 |
| C.3 | 0 | 0.92 | | | 3 | 100 |
| | 5 | 0.52 | -3,6 | No | 4 | 240 |
| C.4 | 0 | 0.81 | | | 2 | 60 |
| | 5 | 0.58 | 6 | Yes | 9 | 12650 |
| C.5 | 0 | 0.76 | | | 2 | 30 |
| | 5 | 0.52 | 11.4 | Yes | 4 | 330 |
| C.6 | 0 | 0.85 | | | 1 | 70 |
| | 5 | 0.59 | -3.8 | No | 3 | 0 |
| 1.1 | 0 | 0.81 | | | 1 | 30 |
| | 5 | 0.54 | 0.8 | Yes | 7 | 800 |
| C.7 | 0 | 0.75 | | | 2 | 100 |
| | 5 | 0.48 | 26.4 | No | 2 | 0 |
| 1.2 | 0 | 0.75 | | | 1 | 40 |
| | 5 | 0.46 | 17.8 | Yes | 5 | 210 |

Durability was considered "Yes" if the service life exceeds 3 months at 50°C

Sample C.1. (= unstabilized) gave a high number of fragments resulting from the polyolefine itself. For the other samples the fragments were believed to be due to the fragmentation of the stabilizers.

In Sample C.1 the MFI of 0.32 is considered to low and unacceptable.

Comparative example C.1 demonstrates that polyolefins cannot be processed without antioxidants. The polymer loses its mechanical properties and volatile and extractable compounds are formed (polymer originating NIAS).

Any of the added stabilisers does protect the polyolefin from degradation during melt conversion. However, thermal stabilisers alone (C.2), while providing additionally durability do cause in general a discolouration of the substrate. A Yellowness index of 7.5 or more is also unacceptable. Processing stabilisers alone (C.3, C.5 & C.6) do not render the substrate suitable for medium and longterm applications. Comparative example C.4 protects the substrate during melt conversion from auto-oxidation without generating too much colour and renders the material suitable for durable applications. However, a significant number and amount of fragments can be detected in the sample.

Only the inventive example I.1 and I.2 protect the polyolefin during melt conversion in a sufficient way without causing an unacceptable number of detectable fragmentation products.

The particular combinations of elements and features in the above detailed embodiments are exemplary only; the interchanging and substitution of these teachings with other teachings in this and the patents/applications incorporated by reference are also expressly contemplated. As those skilled in the art will recognize, variations, modifications, and other implementations of what is described herein can occur to those of ordinary skill in the art without departing from the spirit and the scope of the invention as claimed. Accordingly, the foregoing description is by way of example only and is not intended as limiting. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The invention's scope is defined in the following claims and the equivalents thereto. Furthermore, reference signs used in the description and claims do not limit the scope of the invention as claimed.

## Claims

1. A polyolefin composition, comprising a polyolefin, a radical scavenger and a processing stabilizer, whereby the radical scavenger comprises a compound selected from the group comprising a compound having a first structure (I)

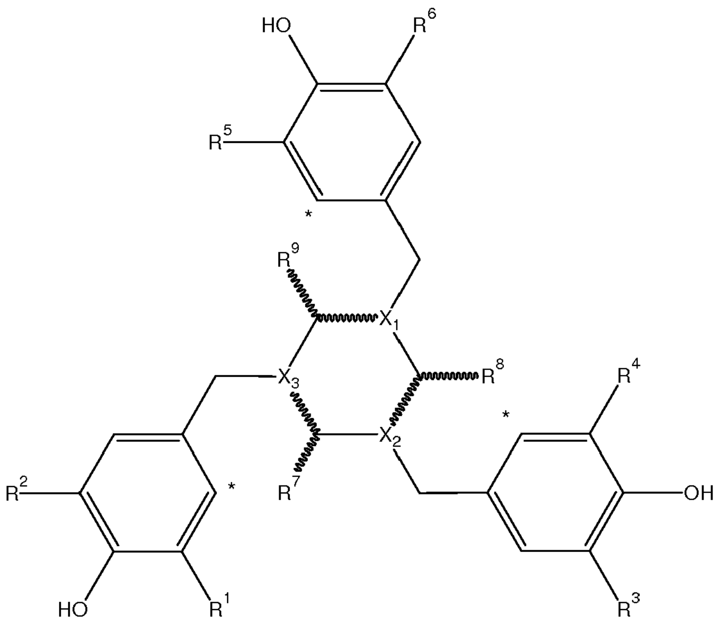

(I)

whereby $R^1$ to $R^6$ are independently from each other alkyl, preferably methy, ethyl, isopropyl, butyl and t-butyl, $R^7$ to $R^9$ are independently from each other either alkyl, preferably methyl, or =O, whereby any of the $R^7$ to $R^9$ may be connected to the nearest carbon atom marked with "*" to form a six-membered ring,
$X^1$ to $X^3$ are independently from each other either C or N

and the center ring of the molecule is aromatic; a compound selected from a second structure A-B-A whereby A has the following structure:

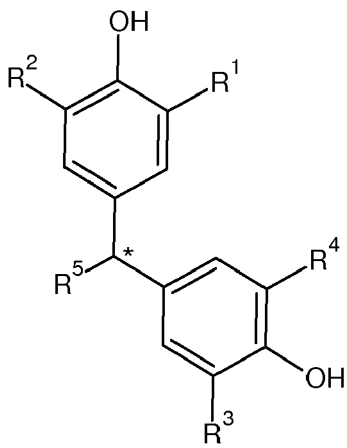

with $R^1$ to $R^5$ being independently selected from either hydrogen or alkyl, preferably methyl, ethyl, propyl, n-butyl, t-butyl, provided that one of $R^1$ and $R^2$ as well as one of $R^3$ and $R^4$ is not hydrogen and whereby A and B are connected via the carbon marked as "*"
and B selected from the group comprising an alkyl bridge having two to six carbon atoms or - $[CH_2]_n$-C=X-O-$[CH_2]_m$-O-C=X-$[CH_2]_n$- with n being an integer from to 0 to 4, X either being O, S or two hydogen atoms and m being an integer from 2 to 6.

or mixtures thereof
and the processing stabilizer essentially does not contain a hydrolizable phosphite compound having 2-4-substituted phenol moiety.

**2.** The polyolefin composition according to Claim 1, whereby in structure (I) $R^1$ to $R^6$ are independently from each other methyl and t-butyl.

**3.** The polyolefin composition according to Claim 1 or 2, furthermore comprising an acid scavenger.

**4.** The polyolefin composition according to any of the claims 1 to 3, whereby the processing stabilizer comprises a compound selected out of the group comprising phosphites, phosphonites, N-hydroxylamines, natural antioxidants, cyclic pentaerythritole diphosphite esters, partially unsaturated hydrocarbons or mixtures thereof

**5.** The polyolefin composition according to any of the claims 1 to 4, whereby the radical scavenger is selected from the group comprising:

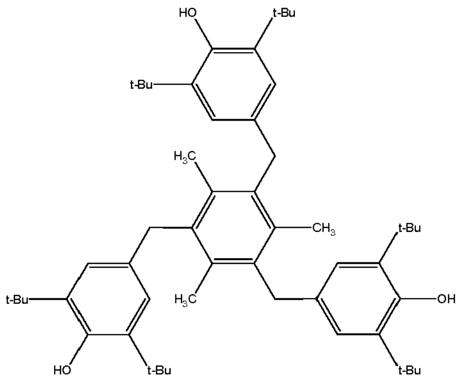
,
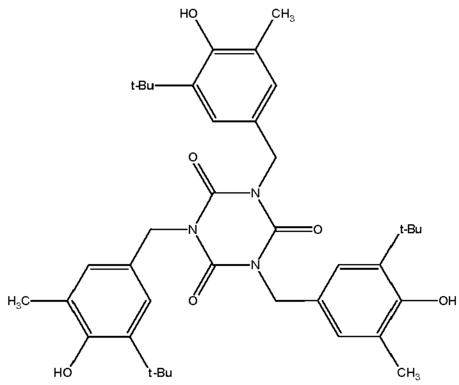
,
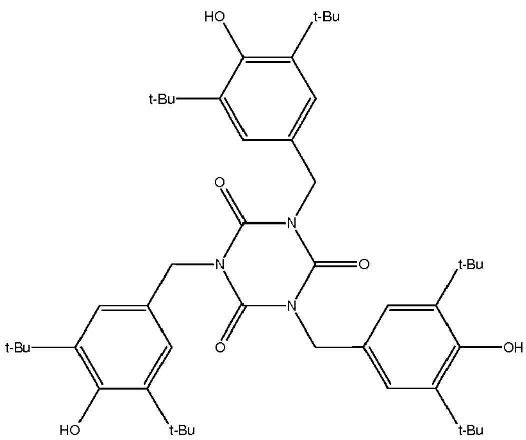

or mixtures thereof.

**6.** The polyolefin composition according to any of the claims 1 to 5, whereby the radical scavenger includes the following compound:

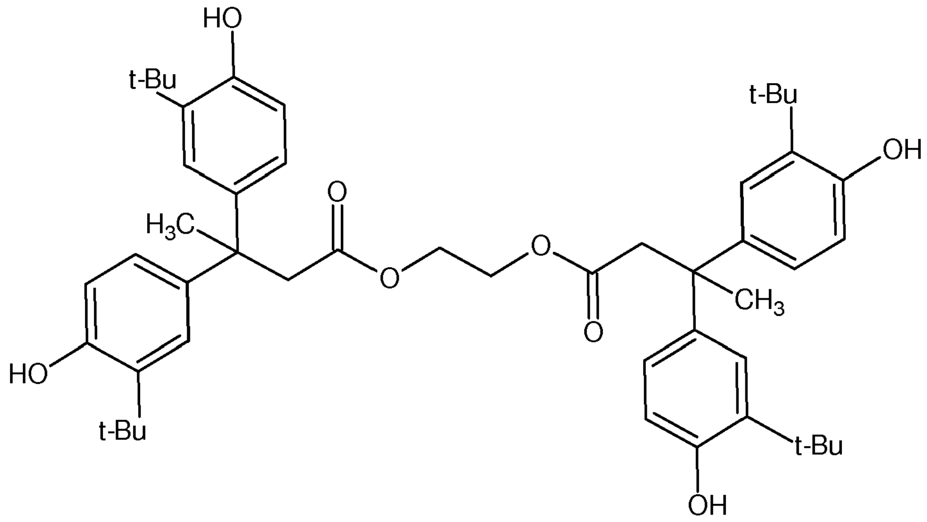

**7.** Use of a stabilizer compositon, comprising a radical scavenger comprising a compound selected from the compound (I) and (II) or mixtures thereof and a processing stabilizer which essentially does not contain does not contain a hydrolizable phosphite compound having 2-4-substituted phenol moiety, in polyolefins for reducing the amount of pollutants.

**8.** Product comprising a polyolefine according to any of the claims 1 to 6 or making use of claim 7, the product being selected out of:

- Pipes
- Rigid food packaging
- Flexible food packaging
- Food appliances

Europäisches Patentamt
European Patent Office
Office européen des brevets

# EUROPEAN SEARCH REPORT

Application Number
EP 17 16 2445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/257311 A1 (ANKER MARTIN [SE] ET AL) 20 October 2011 (2011-10-20)<br>* page 1, paragraphs 12,15,16 *<br>* page 2, paragraphs 18-31,39 *<br>* page 3, paragraphs 47-48,70 *<br>* page 4, paragraphs 77,78; examples *<br>----- | 1-5,7,8 | INV.<br>C08K5/00<br>C08K5/13<br>C08K5/3492<br>C08K5/1545<br>C08K5/32 |
| A | US 2011/257312 A1 (ANKER MARTIN [SE] ET AL) 20 October 2011 (2011-10-20)<br>* page 1, paragraph 12-18; example 3 *<br>----- | 1-8 | |
| X | EP 2 551 297 A1 (BOREALIS AG [AT]) 30 January 2013 (2013-01-30)<br>* page 3, paragraph 14-17 *<br>* page 4, paragraph 24 *<br>* page 5, paragraphs 42,46 *<br>* page 6, paragraph 76-78; example 2 *<br>----- | 1-5,7,8 | |
| X | US 6 448 357 B1 (HAMADA NAOSHI [JP] ET AL) 10 September 2002 (2002-09-10)<br>* examples 1-3,8,9,20-21 *<br>----- | 1,5 | TECHNICAL FIELDS SEARCHED (IPC) |
| X | EP 2 607 417 A1 (BOREALIS AG [AT]) 26 June 2013 (2013-06-26)<br>* page 2, paragraph 6 *<br>* page 3, paragraph 18-21 *<br>* page 4, paragraph 30 *<br>* page 5, paragraphs 31,33,35; examples 3,5 *<br>----- | 1,2,4-8 | C08K |

The present search report has been drawn up for all claims

1

| Place of search | Date of completion of the search | Examiner |
|---|---|---|
| Munich | 23 August 2017 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 16 2445

This annex lists the patent family members relating to the patent documents cited in the above-mentioned European search report. The members are as contained in the European Patent Office EDP file on
The European Patent Office is in no way liable for these particulars which are merely given for the purpose of information.

23-08-2017

| Patent document cited in search report | Publication date | Patent family member(s) | Publication date |
|---|---|---|---|
| US 2011257311 A1 | 20-10-2011 | AU 2009331889 A1 | 01-07-2010 |
| | | BR PI0921446 A2 | 05-01-2016 |
| | | CN 102257054 A | 23-11-2011 |
| | | EP 2199330 A1 | 23-06-2010 |
| | | EP 2367877 A1 | 28-09-2011 |
| | | ES 2483493 T3 | 06-08-2014 |
| | | KR 20110079916 A | 11-07-2011 |
| | | US 2011257311 A1 | 20-10-2011 |
| | | WO 2010072373 A1 | 01-07-2010 |
| US 2011257312 A1 | 20-10-2011 | AU 2009331888 A1 | 01-07-2010 |
| | | BR PI0923149 A2 | 10-02-2016 |
| | | CN 102257051 A | 23-11-2011 |
| | | EP 2199328 A1 | 23-06-2010 |
| | | EP 2367875 A1 | 28-09-2011 |
| | | KR 20110079917 A | 11-07-2011 |
| | | US 2011257312 A1 | 20-10-2011 |
| | | WO 2010072372 A1 | 01-07-2010 |
| EP 2551297 A1 | 30-01-2013 | AU 2012289243 A1 | 20-02-2014 |
| | | CN 103732676 A | 16-04-2014 |
| | | EP 2551297 A1 | 30-01-2013 |
| | | JP 5948415 B2 | 06-07-2016 |
| | | JP 2014527551 A | 16-10-2014 |
| | | KR 20140027513 A | 06-03-2014 |
| | | WO 2013013805 A1 | 31-01-2013 |
| US 6448357 B1 | 10-09-2002 | CN 1281002 A | 24-01-2001 |
| | | ID 26541 A | 18-01-2001 |
| | | JP 2001081250 A | 27-03-2001 |
| | | NZ 505644 A | 21-12-2001 |
| | | TW 527391 B | 11-04-2003 |
| | | US 6448357 B1 | 10-09-2002 |
| EP 2607417 A1 | 26-06-2013 | AU 2012359241 A1 | 17-04-2014 |
| | | CN 103814071 A | 21-05-2014 |
| | | EP 2607417 A1 | 26-06-2013 |
| | | ES 2530869 T3 | 06-03-2015 |
| | | JP 6021925 B2 | 09-11-2016 |
| | | JP 2014534299 A | 18-12-2014 |
| | | KR 20140052056 A | 02-05-2014 |
| | | WO 2013091800 A1 | 27-06-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150090671 A1
- US 20140296398 A1
- WO 2006119935 A1
- US 20050148700 A1